# EUROPEAN PATENT SPECIFICATION

(11) **EP 0 407 027 B1**
(45) Date of publication and mention of the grant of the patent: **19.04.1995**
(21) Application number: 90305802.2
(22) Date of filing: 29.05.1990
(51) Int. Cl.: C23D 13/00, C03C 17/02

(54) **Method for repairing glasslined equipments by sol-gel process**
Verfahren zur Reparatur von mit Glas beschichteten Geräten durch Sol-Gel-Verfahren
Procédé pour réparer des dispositifs revêtus de verre par voie sol-gel

(30) Priority: 26.05.1989 JP 134255/89
(43) Date of publication of application: 09.01.1991
(73) Proprietor: SHINKO PANTEC CO., LTD., Chuo-ku Kobe 651 (JP)
(72) Inventor: Hara, Tatsuo, Higashinada-ku, Kobe 658 (JP); Uegaki, Shigeo, Higashinada-ku, Kobe 658 (JP); Wada, Koichi, Miki 673-04 (JP)
(74) Representative: Hayward, Denis Edward Peter

(56) References cited:
- CA-A- 1 197 277
- GB-A- 2 033 705
- GB-A- 2 135 987
- PATENT ABSTRACTS OF JAPAN, vol. 12, no. 306 (C-522)[3153], 19th August 1988; & JP-A-63 076 887
- Journal of Non-Crystalline Solids 71 (1985), pages 171-185, North-Holland, Amsterdam; C.J. Brinker et al.: "Structural Evolution during the Gel to Glass".
- Journal of Non-Crystalline Solids 48 (1982), pages 31-46, North-Holland, Amsterdam; S.Sakka et al.: "The sol-gel transition in the hydrolysis of metal alkoxides in relation to the formation of glass fibers films"
- Journal of Non-Crystalline Solids 100 (1988), pages 453-460, North-Holland, Amsterdam; M.A. Villegas et al.: "Hydrolytic resistance of Na2O-B2O3-SiO2 gels prepared by sol-gel process".
- Physics and Chemistry of Glasses Vol. 25, N. 5 (1984) pages 134-141; J. Strawbridge et al.: "Characterisation of alkali aluminoborosilicate glass films prepared by the sol-gel process on window glass substrates"
- Jornal Ceramic Soc. Jpn. Inter. Ed. Vol. 95 (1987) pages 20-39; G.W. Scherer: "Structural Evolution of Sol-Gel Glasses"
- Journal of Non-Crystalline Solids 100 (1988), pages 325-329, North-Holland, Amsterdam; T. Woignier et al.: "Al2O3-TiO2 and AlTiO5 ceramics materials by the sol-gel process"
- Journal of Non-Crystalline Solids 48 (1982), pages 47-64, North-Holland, Amsterdam; C.J. Brinker et al.: "Sol-Gel Transition in simples Silicates"

## Description

The present invention relates to a method of repairing a damaged portion of a glass layer of a glasslined steel equipment and more particularly, a method for repairing the same by heating a repair agent comprising chemical compounds which are solidified to a glass by means of the sol-gel process.

A piece of glasslined steel equipment is manufactured by repeatedly applying glass material on a steel substrate of the equipment, heating the entire equipment at a high temperature in a furnace so that a continuous glass layer having a thickness of 1 to 2 mm is fused onto the steel substrate.

As the glasslined steel equipment exhibits the mechanical strength of its steel substrate and also, the resistance to corrosion as well as the smoothness of its glass layer, equipment such as vessels, reactors, and its accessories are thus widely used in chemical, pharmaceutical or food industries. However, during service, the glass layer may locally be damaged by an inadvertent operational error thus leaving a crack or exfoliation.

If such damaged portion remains unrepaired for a further period of operation of the equipment, the corrosion of the steel substrate from the damaged portion will be accelerated and the contamination of handling materials with corroded metals may be involved causing a serious problem. It is thus desired to repair, at its place of installation, any local or partial damage to the glass layer as soon as possible.

Typical methods of local repair for glass lined equipment includes:
(a) a method of using caps or bolts of anti-corrosive tantalum material, in which Teflon (trade mark) packings are employed for sealing between a lining glass layer and the tantalum caps or bolts (see US-A-2 631 360); and
(b) a method of applying an anti-corrosive adhesive of an organic resin such as an epoxy resin;
However, their respective disadvantages are:
(a) of the tantalum repairing method, that there is difficulty in making the caps or bolts correspond to the configuration or extended area of the damaged portion and also, the Teflon (trade mark) packings may be degraded causing penetration of impurities; and
(b) of an epoxy resin repairing method, that the resistances to heat and to solvent are low and inferior, respectively and the application will be very limited. JP-A-61 223 261 discloses a method for repairing the broken part of enamel on a site to high strength by coating the broken part with a silicon alkoxide coating agent and heating the agent at 100-150°C for 10-30 min.
   GB-A-2 135 987 discloses a method to coat a metal or ceramic substrate by applying an alcoholic solution containing a polymeric network of partially hydrolysed metal alkoxide incorporating a finely powdered glass and then heating at a temperature sufficient to melt the powdered glass, about 1000°C.

The sol-gel process is known (see for example Structural Evolution During the Gel to Glass Conversion, by Brinker, et al, Journal of Non-Crystalline Solids 71 (1985) 171 to 185, The Sol-Gel Transition in the Hydrolysis of Metal Alkoxides, Journal of Non-Crystalline Solids 48 (1982) 31 to 46, Hydrolytic Resistance of Na₂O-B₂O₃-SiO Gels Prepared by Sol-Gel Process, Journal of Non-Crystalline Solids 100 (1988) 453-460, Characterisation of alkali aluminoborosilicate glass, Physics and Chemistry of Glasses Vol. 25 No. 5 October 1984 pages 134 to 141, Structural Evolution of Sol-Gel Glasses, Journal of Ceramic Society of Japan, International Edition, Vol 95 pages 20 to 39, Journal of Non-Crystalline Solids 100 (1988) pages 325 to 329 and Journal of Non-Crystalline Solids 48 (1982) pages 47 to 64) in which an alcohol and water solution of an organo metallic compounds such as metal alkoxide, which serves as a start material, is heated at a relatively low temperature for solidification (dehydrolysis reaction and condensation reaction to form a glass). Thus glass can be obtained at much lower temperature than conventional melting process. However, in a repairing method of applying such a material onto a damaged area of the glass layer and heating the area for hydrolysis and condensation, the generation of glass demands a considerable length of time and the shrinkage during solidification will cause a crack or exfoliation in the repairing glass layer. For producing a glass layer without cracking, the glass layer needs to be developed to a thickness of about 1»m and solidification to take about one month. In other words, the cracking during solidification should be eliminated for satisfactory repair.

It is also understood that in the sol-gel process, the higher the temperature for heating, the more the reaction of hydrolysis and condensation in a repair agent is accelerated, thus causing a resultant solid to be closely bonded.

The heating of the repair agent should be effected at a temperature of less than but approximate to 350°C which is about an upper limit allowing a stress on the glass layer to remain without shifting from compression to tension due to the difference in thermal expansion coefficient between the steel substrate and the glass layer.

It is also known that for the purpose of heating of repair agent within a small space in a glasslined steel equipment such as vessel, a hot-air heater or infrared heating lamp is commonly used for repairing with resin material. However, in practice, the heat is dissipated beyond the area to be repaired and thus, the thermal efficiency is low. Thereby, the heating up to 350°C will fail and the working conditions in the equipment will be degraded due to heat dissipation.

The present invention is thus directed for solving the foregoing problems towards a method for repairing the damaged portion of glass lined equipments.

According to the invention there is provided a method for repairing a damaged portion of a glass layer of glass-lined steel equipment, comprising
(a) applying to the damaged portion a first repair agent containing a metal alkoxide, and heating the first repair agent to a temperature up to about 350°C or less to form a first glass layer adhered by a sol-gel process to the steel substrate of the equipment,
(b) applying onto the said first glass layer a second repair agent containing a metal alkoxide and an inorganic filler, and heating the second repair agent to form a second glass layer, and
(c) applying onto the second glass layer a liquid impregnating agent containing a metal alkoxide to penetrate into and fill voids formed in the second glass layer, and heating the liquid impregnating agent.

Cracking or exfoliation, caused by shrinkage during solidification of a repair agent by heating can be avoided with the use of a repair agent mixed with an inorganic filler material. A repairing glass layer having less voids can be achieved by a void fill-up process of impregnating a liquid agent into the voids generated throughout the outer-most of the glass layer, the voids being filled with impregnating liquid which is then heated to form a glass. A phosphate glass layer at the bottom of the repairing layer has a high adhesive strength to the steel substrate.

A sheet of inorganic filler material can be stuck into the damaged area of a glass layer, followed by applying on to the inorganic filler sheet a repair agent which is solidifed to a glass by the sol-gel process. This reduces the repeated cycles for forming glass layer of desired thickness. A smooth surface on a top layer of the repairing layer can be achived by applying onto the repairing layer a repair agent which contains a filler of fine powder whose particle size is less than 1»m in diameter, and heating the same.

By maintaining the temperature for heating a repair agent within a given range, e.g. from 300 to 350°C, causes no tension in the existing glass layer which is thus protected from cracking or falling off about the damaged area.

The apparatus used in such a repairing method can comprise:
(1) a flexible thermal insulation sheet body having a recess on the single side thereof;
(2) electric heater units provided in the recess for emitting far infrared rays;
(3) magnets provided adjacent to the recess for securing the body on a wall of glass lined equipment covering damaged portion to be repaired;
(4) a silica glass cloth enclosing the body for maintaining configuration;
(5) a thermal sensor placed in the recess for locating adjacent to the damaged area; and
(6) a thermal controller coupled to the sensor and the heater units for automatically controlling the temperature of the heater units.

The heater apparatus is adapted for readily increasing the temperature up to a proper degree (300 to 350°C), which ensures no damage to the existing glass layer about the area during heating, and maintaining the same and also, for exhibiting less thermal dissipation and capable of mounting on any place of the inner wall of glasslined equipment.

The invention will be illustrated with reference to the accompanying drawings, in which:
Fig.1 is a longitudinal cross sectional side view showing the repair of a curved area;
Fig.2 is a diagram of thermal expansion curves showing the relation between temperature (Y-axis) and expansion rate (X-axis) in the respect of a steel substrate and a glass layer;
Fig.3 is a longitudinal cross sectional side view showing the completion of repair on a lining glass layer with the lamination of repairing layers;
Fig. 4 is a diagram showing the relation of temperature (X-axis) to density (Y-axis) between a phosphate glass C according to the present invention and a glass D having the same composition as of the glass C and prepared by a conventional melting process;
Fig. 5 is a longitudinal cross sectional side view showing during the repair on a grass layer with a repair agent mixed with powder of inorganic filler material;
Fig. 6 is a longitudinal cross sectional side view showing the completion of repair on a glass layer with a repairing agent mixed with a fine powder of inorganic filler material;
Fig. 7 is a longitudinal cross sectional side view showing the completion of repair on a glass layer with a sheet of inorganic filler material;
Fig. 8 is a longitudinal cross sectional side view showing the repair with the use of a heater apparatus;
Fig. 9 is a longitudinal cross sectional side view of the heater apparatus; and
Fig. 10 is a partial bottom view of the heater apparatus.

### EMBODIMENT 1

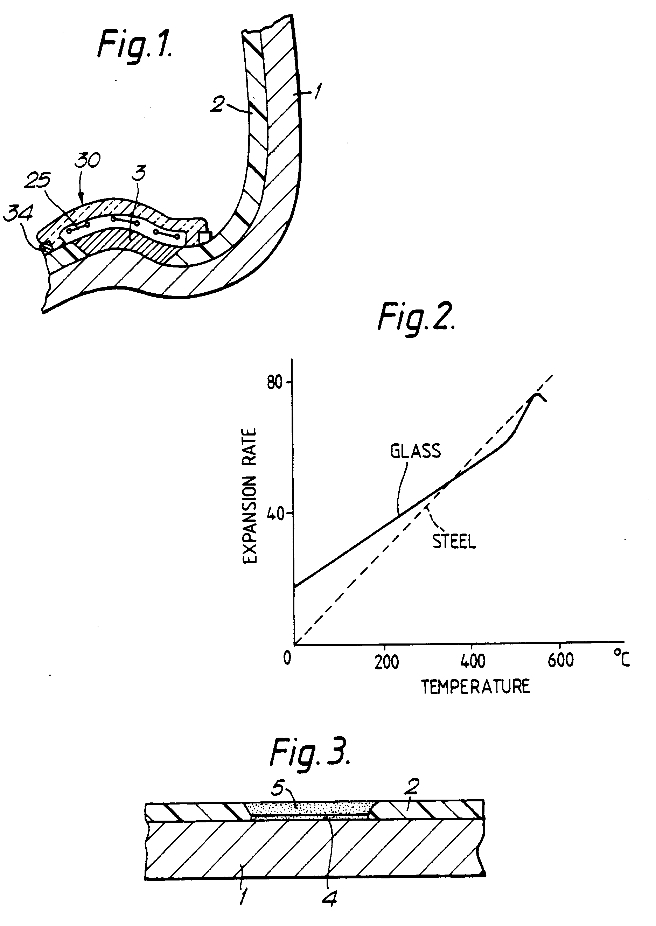

As shown in Fig. 3, a start material is used as the repair agent comprising an aqueous solution of organo metallic compound, e.g. metal alkoxide, or inorganic salt.

According to a sol-gel method, the repair agent is processed into a desired chemically bonded form by chemical reaction in liquid state and after chemical reaction from sol stage to gel stage, is heated up for hydrolysis and condensation to compose a resultant metal oxide or glass.

### (Stage 1: Development of lower (primary) repairing layer)

### 1. Cleaning of damaged area

Rust and impurities on the damaged area of a glass layer are removed using polishing papers or the like and resultant polishing powder and remaining oil are washed out by ethanol. The damaged area cleaned is then dried and the surface of a metal substrate is exposed. Simultaneously, the adjacent area of the existing glass layer is also cleaned down.

### 2. Preparation of lower (primary) repair agent

An organo metallic compound, e.g. metal alkoxide, and an alkaline phoshate are added to an aqueous solution of a phosphoric acid and stirred at 120°C for distillation. When alcohol has been evaporated, a viscous and transparent solution of phosphoric glass material (repairing agent) remains.

### 3. Application

A thin coating of the repairing agent is applied onto the exposed substrate using a brush or the like.

### 4. Heating

When a repair agent is heated at 300 to 350°C, the remaining water is evaporated and thus, a lower repairing layer 4 of glass form is formed.

At the same time, a chemically reactive layer of iron phosphate is developed between the repairing glass layer and the steel substrate.

As shown in Feg. 2, while the existing glass layer 2 is fixedly coated by a conventional melting process to the steel substrate 1, it remains strengthened by a compressive stress applied at room temperature due to the difference in thermal expansion coefficient between the steel substrate 1 and the glass layer 2. As the heating temperature increases, the compressive stress decreases and a tensil stress which may cause crack is built up at the temperature beyond the intersection point between two thermal expansion curves of glass and steel. Although the temperature at the point varies depending on the thermal expansion coefficients of glass layer and steel. In Fig. 2, this temperature is shown about 350°C.

According to the present invention, the adhesive strength between the lowe repairing layer and the steel substrate is increased by the presence of a chemically reactive layer of iron phosphate and hence, the allowable maximum temperature for heating is determined to 300 to 350°C in order to prevent the existing glass layer from cracking due to the difference in thermal expansion.

It is also understood that the lower repairing glass layer contains more than 30 mole% of alkaline metal oxide.

### (Stage 2: Development of upper repairing layer)

### 1. Preparation of upper repair agent

Silicon alkoxide, ethanol, water, and acid solution are mixed and stirred at a temperature of 40°C for partial hydrolysis of silicon alkoxide. The solution is then mixed with a glass or ceramic filler material prior to gelation, forming a repair agent. The repair agent which contains a filler material allows the repairing layer not to shrink when being heated and thus, to bear no cracking.

The filler material is preferred having the properties of improving the resistance to corrosion of the upper repairing layer and increasing the thermal expansion coefficient to approximately the same level as of the existing glass layer, and more preferably, durable in the corrosive environment about a glasslined equipment.

The filler material can be selected from common ceramic powders (e.g. alumina, titania), single- or multi-crystal inorganic fiber materials, specifically shaped powders of spheric or thin strip form, organo metallic compounds (e.g. metal alkoxide), specific inorganic powders produced by liquid or gas phase composition of inorganic salt or the like, and mixtures of the aforementioned materials.

The repair agent is also available in consideration of conductivity, magnetization, non-adhesiveness, chromaticity, etc.

It is thus common to select a powder which is inexpensive and easily obtained.

### 2. Application

The repair agent is applied onto the surface of the lower repairing layer coating over the damaged area, with the use of a brush and dried by blowing air for 10 minutes.

### 3. Heating

The applied agent is then heated to form an upper repairing layer 5.

### (Stage 3: Development of impregnated repairing layer)

### 1. Preparation of impregnating agent

To fill the voids which are generated during solidification between the filler materials in the upper repairing layer due to the effect of dispersible volatilization of ethanol, an impregnating agent is prepared by processing silicon alkoxide, ethanol, water, and acid solution in the same manner as of the upper repair agent.

### 2. Application and heating of impregnating agent

The impregnating agent is applied onto the penetrated into voids of the upper repairing layer and then, heated in the same manner as of Paragraph 3 of "Development of upper repairing layer".

### 3. Repeating process

The procedure of impregnation and heating in above Paragraph 2 is repeated several times and the upper repairing layer 5 is processed for void sealing.

The upper repairing layer 5 may be developed through the cycle of the procedures so that the upper repairing layer 5 which contains less voids and is equal in thickness to the existing glass layer.

### EXAMPLE 1

### (Development of lower repairing layer)

A sodium phosphate, an aluminum tri-isopropoxide, an 85% phosphoric acid, and a proper amount of water were stirred together at 120°C for distillation and a glass of 21Na₂O-12Al₂O₃-67P₂O₃ (mole%) was produced having a thermal expansion coefficient (100 to 130 x 10⁻⁷/°C) a bit smaller than that of a steel substrate.

After the components of isopropanol and water and water had been evaporated, a viscous and transparent solution of phosphate glass (the lower repair agent) was obtained.

A test piece of 2.5 x 100 x 100 mm was fabricated by coating an SS41 steel plate with a JIS R4201 glass lining. A part of glass layer on the test piece was removed by grinding to have a simulated damaged area of 40mm diameter in the center of its glass layer.

The damaged area where the steel palte ws exposed was degreased using ethanol and dried with a dry rag.

The lower repair agent was then applied to the exposed steel surface using a painting brush.

The repair agent was heated at 350°C for 10 minutes. After the remaining water was evaporated by heating from the lower repair agent, a transparent lower repairing layer 4 was developed and simultaneously, a black layer of iron phosphate was generated between the repairing layer and the steel base.

### (Development of upper repairing layer)

A solution composed of 20 moles of ethanol, 10 moles of silicon tetraethoxide, 5 moles of water, and 1 mole of 85% phosphoric acid was stireed at 40°C in the atmosphere for 2 hours and then, cooled down to a normal temperature. The resultant solution was provided in which silicon ethoxide was partially hydrolyzed and thus, found showing no sign of gelation during a one-month period of sealed storage.

For producing an upper repair agent, the solution was then mixed at a weight ratio of 1:1 with a filler of soda lime glass powder which was arranged in composition so as to have a thermal expansion coefficient of 130 to 150 x 10⁻⁷/°C.

The upper repair agent was applied to the test piece over the lower repairing layer, using a painting brush.

After dried at a room temperature for 10 minutes, the upper repair agent was heated by a far infrared heater at 350°C for another 10 minutes.

Also, a solution composed of 50 moles od ethanol, 10 moles of silicon tetraethoxide, 50 moles of water, and 5 moles of 85% phosphoric acid was stirred at 25°C in the atmosphere for 2 hours, thus constituting an impregnating repair agent.

The impregnating agent was penetrated into the voids of upper repairing layer of the upper repair agent and heated in the same manner as of the upper repair agent. This procedure was then repeated five times.

Separately, a bar-shaped composite material (a filler) which has a thermal expansion coefficient of 100 to 130 x 10⁻⁷/°C and is to be added to the upper repair agent, were prepared by a cycle of the foregoing procedures.

### EXAMPLE 2

### (Exfoliation test)

The test piece fabricated in Example 1 was tested by a series of thermal procedures; 5 hours of heating in boiling water, and 5 hours of cooling at normal temperature.

After 6 months, neither falling off nor crack in the repairing glass layer was detected.

### EXAMPLE 3

### (Pinhole test)

A test piece was fabricated in the same manner as in Example 1.

The pinhole test on the repaired area was carried out in the same conditions as of the exfoliation test of Example 2, except that a 0.1 N hydrochloric acid was used in place of the water.

After 6 months, both the repaired area and the acid solution exhibited no change of color to brown and thus, no corrosion of the steel substrate by the hydrochloric acid solution was detected.

### EXAMPLE 4

### (Water durability test)

A test piece having a base of SUS304 stainless steel, 2 x 100 mm, was fabricated in the same manner as in Example 1.

After the exposure of the test piece in boiling water for 6 months, the corrosion rate of the repairing glass layer measured less than 1 mm/year.

### EXAMPLE 5

### (Adhesive test)

A test piece was fabricated, conforming to JIS R4201, from an SS41 steel plate of 6 x 80 x 80 mm in the same manner as in Example 1.

Then, a steel ball of 36.51 mm in diameter (and 200 g in mass) was vertically dropped from 40 cm high onto the repaired portion of the test piece and the adhesiveness of the layer was examined.

In result, no crack to the steel substrate was detected in the repaired area treated according to the present invention.

For comparision, another test piece was fabricated in which the procedure started from Stage 2 of Example 1 omitting the Stage 1. The test piece was also tested in the above method. A crack to the steel substrate was detected at a probability of 30%.

### EXAMPLE 6

An open-type glasslined tank (JIS R4201: capacity of about 100 liters) was fabricated and about 100 cm² of its glass layer of interior wall was removed by grinding simulating an extensive damaged area. The damaged area was then repaired and tested in the same manner as of Example 1.

The resultant repair exhibited no sign of crack in the existing glass layer around the repaired area.

### EXAMPLE 7

The same repair and test as of Example 5 was effected on the curved area of a flange (6mm in curvature radius) of the tank fabricated in Example 5.

Also, no crack was detected in the existing glass layer around the repaired area.

The repaired area was then tested for adhesiveness to the steel substrate in the same manner as of Example 5 and in result, no crack was detected.

### EMBODIMENT 2

As shown in Fig. 3, to repair the damage in a glass layer 2 coated on a steel base 1 of a glasslined equipment, the process is provided in which a lower repairing layer 4 having strong adhesiveness to the steel surface is first developed from a repair agent of phosphate sol-gel glass and then, an upper repairing layer 5 having the better resistance to corrosion and thermal expansion is coated over the lower layer 4.

### (Stage 1: Development of lower repairing layer)

### 1. Cleaning of damaged area

Rust and impurities on the damaged area of a glass layer are removed using polishing papers or the like and resultant polishing powder and remaining oil are washed out by ethanol. The damaged area cleaned is then dried and the surface of a metal substrate is exposed. Simultaneously, the adjacent area of the existing glass layer is also cleaned down.

### 2. Lower repair agent

An organo metallic compound, e.g. metal alkoxide, and an alkaline phosphate are added to a phosphoric acid water solution and stirred at 120°C for distillation. When alcohol has been evaporated, a viscous and transparent solution of phosphoric glass material is acquired to serve as the lower repair agent. It should be prepared such that a resultant glass derived from the lower repair agent contains more than 30 mole % of alkaline metal oxide.

### 3. Application

The lower repair agent is applied onto the damaged area using a brush or the like.

### 4. Heating

When the damaged area is heated at 300 to 350°C, the remaining water is evaporated and thus, the lower repairing layer 4 of glass is formed.

At the same time, a chemically reactive layer of iron phosphate is developed between the repairing glass layer and the steel substrate.

While the glass layer 2 remains strengthened by a compressive stress applied at room temperature due to the difference in thermal expansion coefficient (See Fig. 2) between the steel base 1 and the glass layer 2. As the heating temperature increases, the compressive stress decreases. When the temperature rises to over 350°C, a tension is generated in the glass layer.

Although the phosphate glass which exhibits a higher adhesive strength when heated to a higher temperature can be heated up to a high temperature (close to the fusing point of the glass), it should be heated to less than the above limit temperature or 350°C to avoid damage to the adjoining glass layer.

### (Stage 2: Development of upper repairing layer)

### 1. Upper repair agent

An organo metallic compound, e.g. metal alkoxide, and an alkaline phosphate are added to an aqueous solution, a phosphoric acid and stirred at 120°C for distillation. When alcohol has been evaporated, a viscous and transparent solution of phosphoric glass material is obtained to serve as the upper repair agent. It should be prepared such that a resultant glass derived from the upper repair agent contains more than 15 mole % of alkaline oxide.

### 2. Application

The upper repair agent is applied onto the lower repairing layer formed on the damaged area using a brush or the like.

### 3. Heating

The repaired area is then heated at about 350°C for 10 minutes and after complete evaporation of the remaining water, the upper repairing layer 5 of glass form is developed.

### 4. Repeating process

The above procedures 2 and 3 are repeated several times and the upper repairing layer 5 is built in laminated arrangement so as to be equal in thickness to the existing glass layer at the adjacent area.

Although the upper and lower repair agents are different in chemical composition, they are partially similar in the process of development and thus, may preferably be built up by a series of the cycle operations.

### EXAMPLE 8

A potassium phosphate, an aluminum tri-isopropoxide, an 85% phosphoric acid, and a proper amount of water, of which amounts are appropriate to produce a glass expressed as 43K₂O-2Al₂O₃-55P₂O₅(mole%), were stirred together at 120°C for distillation.

When the components of isopropanol and water had been evaporated, a viscous and transparent solution of phosphate glass (the lower repair agent) was obtained.

A test piece measuring 2.5 x 100 x 100 mm was fabricated by containing an SS41 steel plate with a JIS R4201 glass lining. In the center of its glass layer on the test piece was then removed by grinding to have a simulated damaged area of 40mm diameter.

After removal of rust and impurities with a polishing paper, the damaged area where the steel substrate was exposed was degreased using ethanol and cleaned with a dry rag. The lower repair agent was then applied onto the exposed steel surface using a painting brush.

The repair agent was heated at 350°C for 10 minutes. After the remaining water was evaporated by heating from the lower repair agent, a transparent lower repairing layer 4 was developed and simultaneously, a black layer of iron phosphate was generated between the repairing layer and the steel base.

Also, the materials, listed in Table 1, for producing a glass expressed as 63P₂O₅-10Li₂O-10Na₂O-12Al₂O₃-4B₂O₃-0.5CoO-0.5Y₂O₃ (mole %) and having a thermal expansion coefficient smaller than the base steel, were stirred at 120°C for distillation. After removal of organic solvents, e.g. isopropanol, and water, a transparent phosphate glass solution (the upper repair agent) was obtained.

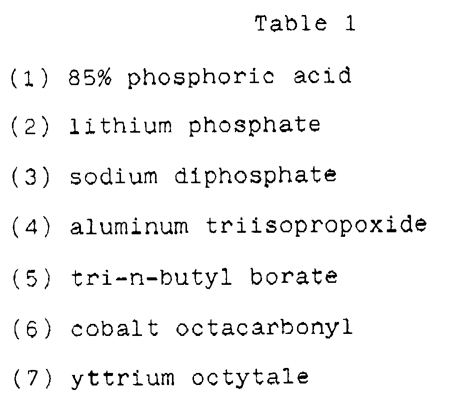

Then, the upper repair agent was applied onto the test piece carrying the lower repairing layer using a painting brush.

The test piece was heated by a heater at 350°C for 10 minutes.

The application and heating of the upper repair agent was repeated until the upper repairing layer becomes equal in thickness with the existing glass layer at the adjacent area.

### EXAMPLE 9

### (Exfoliation test)

Using a criterion tester of JIS R4201, the test piece fabricated in Example 8 was tested by a series of heating cycle; 5 hours of heating in boiling water, and 5 hours of cooling at room temperature.

After 3 months test, neither falling off nor crack in the repairing glass layer was detected.

### EXAMPLE 10

### (Pinhole test)

A test piece was fabricated in the same manner as in Example 8.

The pinhole test on the repaired area was carried out in the same conditions as of the exfoliation test of Example 9, except that a 0.1 N hydrochloric acid was used in place of the water.

After 3 months test, both the repaired area and the acid solution exhibited no change of color to brown and thus, no corrosion of the steel plate by the hydrochloric acid solution was detected.

### EXAMPLE 11

### (Adhesive test)

A test piece was fabricated froman SS41 steel plate of 6x 80 x 80 mm in the same manner as in Example 1. An adhesive test conforming to JIS R4201 was carried out in which a steel ball of 36.51mm in diameter (and 200g in mass) was vertically dropped from 40 cm high onto the repaired glass layer of test piece and the exfoliation on the surface was examined.

In result, no crack to the steel plate was detected in the repaired area treated according to the present invention.

### EXAMPLE 12

### (Application to container structure)

An open-type glasslined tank (capacity of about 100 liters, JIS R4201) was fabricated and about 200 cm² of its glass layer of interior wall was removed by grinding for simulating an extensive damaged area. The damaged area was then repaired and tested in the same manner as of Example 8 according to the present invention.

The resultant repair exhibited no sign of crack in the existing glass layer around the repaired area.

### EXAMPLE 13

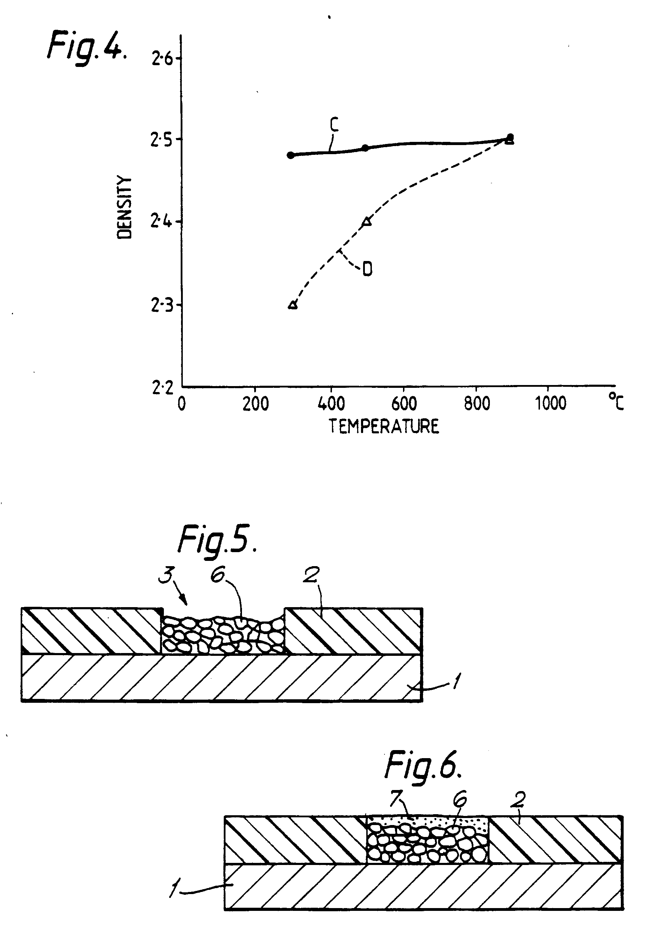

Shown in Fig. 4 is the comparison of change in the density between the phosphate glass C of the present invention and another phosphate glass D formed from a similar oxide composition by a conventional melting method, in which the improved glass C having a high density is produced at a lower temperature than D.

When an incremental amount of metallic oxide other than alkaline oxide is added, the phosphate glass produced by the conventional melting process is enhanced in the resistance to corrosion, but will require a higher temperature for melting process because of elevation of its softening point.

The upper repair agent of the present invention employing a metal alkoxide in place of the metal oxide can be turned into a glass form at a lower temperature.

If the metal alkoxide only is used as the starting material, the abrupt shrinkage of the material during heating will cause cracking, thus ensuring no crack-free development of a thick layer. The improved phosphate glass of the present invention is however increased in the density of bridging as the water evaporates, whereby the cracking caused by abrupt shrinkage of materials will be avoided.

### EMBODIMENT 3

1. Preparation of basic repair agent
   A basic repair agent is prepared for producing a multi-component glass expressed as Na₂O-ZrO₂-SiO₂ and having a thermal expansion coefficient equal to that of the existing glass layer about the damaged area, from a mixture of the following ingredients:
   (1) sodium ethoxide (Na-OEt)
   (2) silicon tetraethoxide (Si-(OEt)₄)
   (3) zirconium oxide chloride (with 8H₂O) (ZrCl₂O-8H₂O)
   (4) ethanol (EtOH-H₂O)
   (5) water (H₂O)

   The preparation is made in which the above listed ingredients are added to a mixture of ethanol and water in a glass beaker and refluxing at 80°C under stirring for 1 h. In result, a transparent basic repair agent is obtained.
2. An inorganic powder filler which is preferably a glass powder having the same or similar properties as of the existing glass layer or a ceramic powder approximate or equal in both the thermal expansion coefficient and resistance to corrosion to the same, is added to the basic repair agent, yielding an upper repair agent.
3. Also, an organo metallic compound, e.g. metallic alkoxide, and an alkaline phosphate are added to a phosphoric acid water solution and stirred, with being heated, for distillation, so that a transparent lower repair agent is obtained.

### (Procedures of repair)

1. The damaged area of an existing glass layer of a glasslined equipment, where the steel substrate is exposed, is polished by a grinder and cleaned down with an organic solvent.
2. A lower repair agent is applied on the exposed steel surface.
3. After dried by air for 10 minutes, the lower repair agent is heated at 350°C by a heater for another 10 minutes and upon solidification, a lower repairing layer is formed.
4. An upper repair agent is then applied onto the lower repairing layer.
5. After dried by air for 10 minutes, the upper repair agent is heated at 350°C by a heater for another 10 minutes and upon solidification, an upper repairing layer is formed.
6. The above procedures of Steps 4 and 5 are repeated until the repairing layers become equal in thickness to the existing glass layer at the adjacent area.
7. A basic repair agent is applied onto the upper repairing layer for impregnation and then, heated in the same manner as of Step 3. This procedure is repeated five times.

Accordingly as shown in Fig. 3, in the damaged area of the existing glass layer 2, both the lower repairing layer 4 bonded to the steel substrate 1 of the glasslined equipment and the upper repairing layer 5 composed of the glass expressed as Na₂O-ZrO₂-SiO₂ are produced.

From the basic repair agent according to the present invention, an improved repairing layer having a higher adhesive property can be developed in which the alkoxide solution having a high hydrophilic nature is chemically bonded to the hydroxy (OH) groups of an iron oxide generated on the steel substrate.

In addition, the lower repairing layer 4 can provide a chemically reactive layer of iron phosphate developed directly on the steel substrate 1, increasing the adhesive strength between the steel substrate 1 and the lower repairing layer 4.

More particularly, the upper repairing layer 5 is developed from the upper repair agent containing a powder filler for multi-composition, so that while voids between particles of the filler particle are filled with the basic repair agent, further voids caused by shrinkage during solidification are filled and sealed off by repeating the procedures of impregnation and solidification of the basic repair agent, thereby avoiding the generation of cracks or pin-holes and ensuring the higher durability to water.

While using solely the metallic alkoxide, (e.g. a silicon alkoxide) involves the achievement of a common silica glass having a poor resistance to alkali, the multi-component glass of the present invention expressed as Na₂O-ZrO₂-SiO₂ is improved in the resistance to alkali by addition of ZrO₂. Also, when the filler is selected from materials having a degree of the resistance to corrosion, satisfying the requirements of such a glasslined equipment, the repairing layer can be enhanced in the resistance to corrosion.

By addition of Na₂O, the thermal expansion coefficient of the repairing layer of the Na₂O-ZrO₂-SiO₂ multi-component glass can be increased to 100 x 10⁻⁷°C⁻¹ corresponding to that of the steel substrate, higher than 5 x 10⁻⁷°C⁻¹ of the silica glass layer.

In general, the glass layer of the glasslined equipment remains bearing a stress of compression caused at room temperature by the difference in thermal expansion and thus, composite strengthened. As the heating temperature rises, the compressive stress decreases and when the temperature exceed 350°C, a tension will be generated.

According to the present invention, both the upper and basic repair agent are heated up to not more than 350°C, ensuring the adhesive strength between the repairing layers.

### EXAMPLE 14

A basic repair agent was prepared for producing a multi-component glass expressed as Na₂O-ZrO₂-SiO₂ and having a thermal expansion coefficient of 100 x 10⁻⁷°C⁻¹ a bit smaller than that of the steel substrate, using the composition described in Table 2.

**Table 2**

| Composition of basic repair agent (in gram) | |
|---|---|
| sodium ethoxide (Na-OEt) | 0.5 |
| zirconium oxide chloride (ZrCl₂O-8H₂O) | 1.0 |
| silicon tetraethoxide (Si-(OEt)₄) | 8.5 |
| ethanol (EtOH-H₂O) | 10.0 |
| water (H₂O) | 8.0 |

For the preparation, the above listed ingredient were added to a mixture of ethanol and water in a glass beaker and stirred by refluxed at 80°C under stirring for 1 h. In result, a transparent basic repair agent was obtained.

A glass or ceramic powder filler which has a good resistance to corrosion and a thermal expansion coefficient approximately equal to that of the existing glass layer at the adjacent area, was added to the basic repair agent to form an upper repair agent.

A test piece measuring 2.5 x 100 x 100 mm was fabricated by coating an SS41 steel base with a JIS R4201 glass lining. The test piece was then ground to have a simulated damaged area of 40 mm diameter in the center of its glass layer.

The damaged area where the steel substrate was exposed was degreased using ethanol and cleaned with a dry rag.

The upper repair agent was then applied to the exposed steel surface.

By repeating the above procedure a desired number of times, a repairing layer having a given thickness was formed.

Then, the basic repair agent was applied onto the repairing layer for impregnating and heating. Those procedures were repeated five times.

Also, in the same manner, a repair agent was fabricated in a bar form of 4 x 20 mm and its thermal expansion coefficient measured 100 x 10⁻⁷°C⁻¹.

The thermal expansion coefficient is a bit smaller than that of the steel substrate and thus, the repairing layer remains composite strengthened by a resultant stress of compression existing at a room temperature.

### EXAMPLE 15

### (Exfoliation test)

Using a criterion tester of JIS R4201, the above test piece was carried out by a series of thermal procedures; 5 hours of heating in boiling water, and 5 hours of cooling at room temperature.

After 6 months, neither falling off nor crack in the repairing glass layer was detected.

### EXAMPLE 16

### (Pinhole test)

A test piece was fabricated in the same manner as in Example 14.

The pinhole test was carried out in the same conditions as of the exfoliation test of Example 15, except that a 0.1 N hydrochloric acid was used in place of the water.

At the end of 6 months, both the repaired area and the acid solution exhibited no change of color to brown and thus, no corrosion of the steel substrate by the hydrochloric acid solution was detected.

### EXAMPLE 17

### (Water durability test)

A test piece having a base of SUS304 stainless steel, 2 x 100 mm, was fabricated in the same manner as in Example 14.

After the exposure of the test piece in boiling water for 6 months, the corrosion rate of the repairing glass layer was measured less than 0.5 mm/year.

### EXAMPLE 18

### (Adhesive test)

A test piece was fabricated from an SS41 steel plate of 6 x 80 x 80 mm in the same manner as in Example 18.

An adhesive test conforming to JIS R4201 was carried out in which a steel ball of 36.51 mm in diameter (and 200 g in weight) was vertically dropped from 45 cm high onto the repaired layer of the test piece and the exfoliation on the surface was examined. In result, no crack to the steel plate was detected in the repaired area treated according to the present invention.

### EXAMPLE 19

### (Application of repairing layer to container structure)

An open-type glasslined tank (capacity of about 100 liters, JIS R4201) weas fabricated and about 100 cm² of its glass layer of inner wall was removed by grinding for simulating an extended damaged area. The damaged area was then repaired and tested in the same manner as of Example 15 according to the present invention.

The resultant repair exhibited no sign of crack in the existing glass layer around the repaired area.

### EXAMPLE 20

### (Application of repairing layer to a region of irregular configuration in container structure)

The same repair and test as of Example 19 was effected on the curved area of a flange (6 mm in curvature radius) or the tank fabricated in Example 19.

Also, no crack was detected in the existing glass layer around the repaired area.

An adhesiveness of the repaired layer to the steel substrate was then tested in the same manner as of Example 18 and in result, no crack was detected.

### EMBODIMENT 4

A repair agent is prepared by mixing and stirring at 25°C for one hour a sol-gel solution containing the ingredients listed in Table 3.

**Table 3**

| | |
|---|---|
| silicon tetraethoxide | 20 g |
| 85% phosphoric acid | 1 g |
| ethanol | 20 g |
| water | 20 g |

Separately of the ingredients in Table 3, there are provided different types of inorganic ultrafine powder of which particle is less than 1»m in diameter, including silicon carbide ultrafine powder (particle diameter < 1»m), silica ultrafine powder (particle diameter: dozens of Å) prepared by gas phase process, and zirconia spherical ultrafine powder (particle diameter: dozens of Å). Each of the ultrafine powders can be prepared through aggregation of dispersible molecules in gas or liquid phase. A filler powder is selected from the ultrafine powders and added 1% to 10% by weight to the above sol-gel solution, providing an upper repair agent for the top surface.

On the other hand, an inorganic filler which is in grit form an equal in thermal expansion coefficient and resistance to corrosion to the existing glass layer, is added to the sol-gel solution to provide a lower repair agent.

As shown in Fig. 5, the damaged area 3 of a glass layer 2 provided on a steel substrate 1 in a glasslined equipment is repaired in a manner according to the present invention, in which the procedures of applying the lower repair agent onto the exposed steel surface, drying it by air for 30 minutes, and heating it at 300 to 350°C for 10 minutes are repeated until a lower repairing layer 6 become almost equal in thickness to the existing glass layer 2 of the adjacent area.

Then, as shown in Fig. 6, the procedures of applying the upper repair agent to the lower repairing layer 6 for impregnation, drying it by air for 30 minutes, and heating it at 300 to 350°C for 10 minutes are repeated several times to develop an upper repairing layer 7.

### EXAMPLE 21

### 1. Preparation of repair agent

A repair agent was prepared by mixing and stirring at 25°C for one hour the sol-gel solution containing the ingredients listed in Table 3.

3% by weight of silicon carbide ultrafine powder, of which particle is less than 1»m in diameter, was added to the solution, forming the upper repair agent.

Separately, the lower repair agent was prepared by mixing the solution with grains of glass having the same thermal expansion coefficient and resistance to corrosion as of the existing glass layer.

### 2. Repairing of damaged area of glass layer

A 1mm-thick glass layer was fused to a 100 x 100mm plate of SS41 steel, 3.2mm in thickness, and treated having a simulated damaged area of about 40 mm in diameter in the center thereof.

The procedure of applying the lowe repair agent onto the exposed steel surface, drying it for 30 minutes, and heating it at 350°C for 10 minutes were repeated until the thickness of a lower repairing layer 6 became almost equal to that of the existing glass layer of the adjacent area.

Then, the procedures of applying the upper repair agent onto the lower repairing layer 6, drying it for 30 minutes, and heating it at 350°C for 10 minutes were repeated several times to develop an upper repairing layer 7.

### 3. Result of repair

The surface of the repaired area treated by the repairing method of the present invention exhibited more than 10 times the smoothness of a repaired (finished) surface with no upper repairing layer 7 provided.

It was also found that the adhesion of contents to the improved repairing layer in the glasslined equipment was lessened.

### EMBODIMENT 5

For repairing the damage to a glass layer of a glasslined equipment, a sheet of inorganic material corresponding to the shape of the damaged portion is filled into the portion to be repaired and then, a basic repair agent prepared from a start material of sol-gel solution containing metallic alkoxide and metal salt is applied onto the inorganic material sheet and heated at 300 to 350°C. The use of such an inorganic material sheet can reduce the number of repeating procedures of applying the repair agent to the damaged area and heating the same.

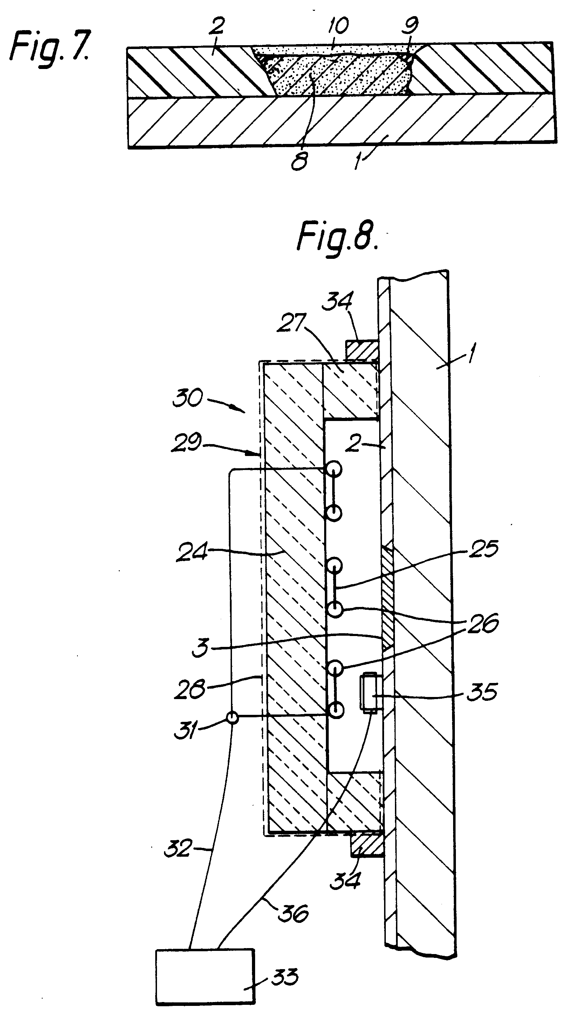

As shown in Fig. 7, the damaged area is filled with a sheet of inorganic material 8 corresponding to the shape of the damaged area for repairing the damaged areas of a glass layer 2 provided on a sheet substrate 1. The inorganic sheet 8 may be of glass cloth woven from long glass fibers, nonwoven fabric of short ceramic fibers, or the like.

A (basic) repair agent of sol-gel solution to be applied onto the inorganic sheet is prepared by mixing and stirring the ingredients shown in Table 3 at a temperature of 25°C for one hour.

The repair agent prepared is then applied onto the inorganic sheet, dried by air for 30 minutes, and heated at 350°C for 10 minutes so as to produce a solidified glass 9. The inorganic sheet 8 is closely placed onto the damaged area, forming a lower repairing layer.

Also, an inorganic ultrafine powder, of which particle is less than 1»m in diameter, is added to the repair agent for the top layer. The procedures of applying the upper repair agent onto the lower repairing layer, dried it by air for 30 minutes, and heated it at 350°C for 10 minutes are repeated to form a top layer.

### EXAMPLE 22

A basic repair agent was prepared by mixing and stirring the ingredients listed in Table 3 at 25°C for one hour.

A 1mm-thick glass layer was fused to a 100 x 100 mm palte ot SS41 steel, 2 mm in thickness, and treated having a simulated damaged area of about 40 mm in diameter in the center thereof.

The damaged area was filled with a glass cloth which was approximately equal to shape and property to the existing glass layer. Then, the procedures of applying the basic repair agent onto the glass cloth, drying it for 30 minutes, and heating it at 350°C for 10 minutes were repeated to form a lower repairing layer.

Also, an upper repair agent was prepared by adding an ultrafine powder of alumina, of which particle is less than 1»m in diameter, to the basic repair agent. The procedures of applying the upper repair agent onto the lower repairing layer, drying it for 30 minutes, and heating it at 350°C for 10 minutes were repeated to develop a top layer. The top layer was smooth on the surface and exhibited better resistance against adhesion of the contents of glasslined equipment.

The top layer was developed by repeating only a few times the above procedures.

### EMBODIMENT 6

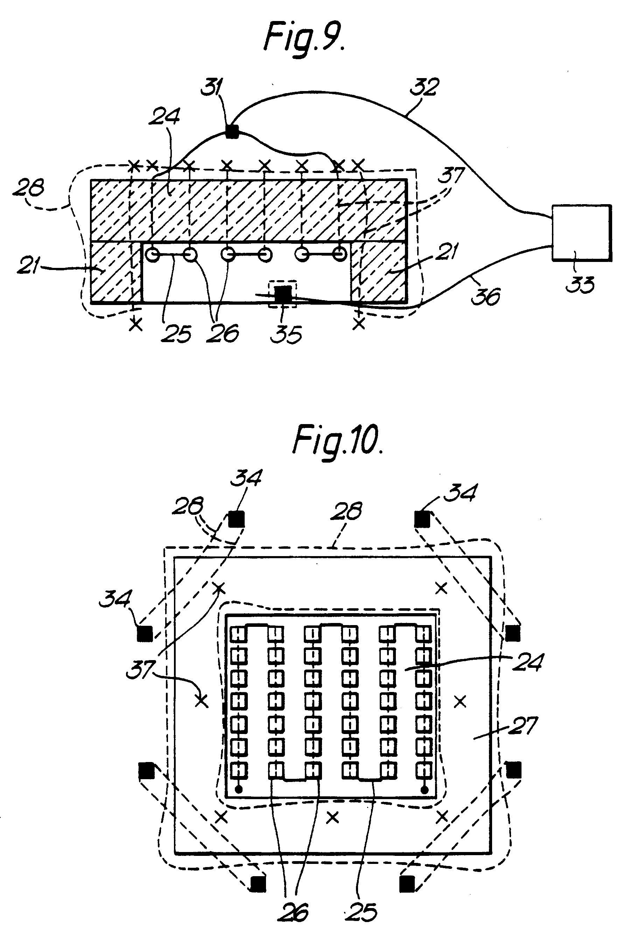

As shown in Figs.8 to 10, a heater unit 30 is provided including a thermal insulation sheet 24 of alumina fiber which has ceramic rings (or far infrared ray emitters) 26 for emitting far infrared rays fitted thereto and incorporated with an electric resistor and heater wire (of nickel chrome) 25. The ceramic rings 26 are arranged in zigzag and fixedly mounted by heat-resistant silica glass strings 37 to the central area of one side of the insulation sheet 24.

A distance retainer 27 of flexible thermal insulation material is also mounted around the insulation sheet 24. Both the sheet 24 and retainer 27 are covered with a silica glass cloth 28 for maintaining the configuration, all of which being integrally bound with silica glass strings, thus constituting an enclosure 29 in the heater unit 30.

Both ends of the nickel chrome heater wire 25 are outwardly extended from the sheet 24 and coupled to a connector 31 of ceramic material which is in turn coupled by a heat-resistant insulated wire 32 to a thermal controller 33 and a power source (not shown).

For operation of a heater according to the present invention, the heater unit 30 is capable of being placed over the repairing area 3 with its distance retainer 27 directly seating on the existing glass layer 2 at the adjacent area and secured at position with rare earth magnets 34 having a powerful magnetic force. Also, the far infrared ray emitted 26 remain equally spaced from the repairing area 3. The heater according to the present invention is also applicable to the repairing area 3 of a curved glass layer 2 because of the flexibility of the heater unit 30 (See Fig.1).

While the heater unit 30 is set in place, a thermal measuring instrument (or thermocouple) 35 is also mounted by magnet(s) adjacent to the repairing area 3 with its compensation lead line 36 being coupled to the exterior thermal controller 33.

When the heater is energized, far infrared rays from the emitters 26 on the nickel chrome wire 25 heat up the repairing area 3. Simultaneously, the thermal measuring instrument 35 detects a temperature during heating and controls the output of the thermal controller 33 for fast increase to and maintaining of a desired degree of temperature. This thermal control can accelerate the dehydration and condensation of the repair agent on the repairing area 3 and contribute to the optimum conditions of repair operation.

The flexible thermal insulation sheet 24 was formed of an alumina fiber sheet, 20mm thick and 150mm square, available from Toshiba Monoflux (Trade Mark) and the distance retainer was also cut out from a sheet of the same material. The effective heating area of the enclosure 29 was 120cm². The heater wire 25 was of 600W/200V and the far infrared ray emitted 26 was a ceramic ring of 8mm in inner diameter, 10mm in outer diameter, and 10mm in length.

The magent 34 was used of a samarium cobalt magnet, 5x20x25mm.

In practice, the heater exhibited a temperature rise to 300°C in about 5 minutes.

### EMBODIMENT 7

As shown in Fig. 1, a repair agent is applied by a brush or the like onto the repairing area 3 where the steel substrate 1 is exposed and has been cleaned with ethanol and dried. The repair agent is preferably a mixture solution of silicon ethoxide, ethanol, water and acid.

Then, the repair agent on the repairing area 3 is heated by the heater 30 to a predetermined degree (ranging from 300 to 350°C) and maintained the temperature for acceleration of the solidification of the repair agent to a glass by hydrolysis and condensation, so that a repairing layer having an high adhesive strength can be obtained.

### EXAMPLE 23

The center region of an inner glass layer 2 of an open-type glasslined tank (JIS R4201, 1 kiloliter capacity) was removed by grinding having a simulated damaged area, 80mm in diameter, where a steel substrate 1 is exposed.

A repair agent (prepared by mixing silicon ethoxide, ethanol, water, and acid) was applied onto the exposed steel surface and heated at 300°C for 10 minutes.

The result of repair was excellent showing no sign of cracking in the existing glass layer around the repaired area.

### EXAMPLE 24

A simulated damaged area, about 200 cm², was created in the inner glass layer of the tank used in Example 23.

The repair was carried out under the same conditions as in Example 23, except that the effective heating area of the heater was 400 cm² and the power supply was of 1KW/200V.

The temperature increase to a predetermined degree took about 10 minutes and no crack was detected in the existing glass layer around the repaired area.

### EXAMPLE 25

The repair according to the present invention was effected on the curved surface, 6mm in curvature radius, of a flange of the tank used in Example 23.

The result of repair on such a small curvature radius region was equally so good that no crack was detected in the existing glass layer around the repaired area.

### EXAMPLE 26

The adhesive test for the repairing layer to the damaged area in the tank used in Example 23 was carried out.

Conforming to JIS R4201, a steel ball of 36.51mm in diameter (and 200g in weight) was vertically dropped from 45cm high onto the repaired area and the exfoliation on the surface was examined. In result, no crack to the steel substrate was detected in the repaired area.

## Claims

1. A method for repairing a damaged portion of a glass layer of glass-lined steel equipment, comprising
(a) applying to the damaged portion a first repair agent containing a metal alkoxide, and heating the first repair agent to a temperature up to about 350°C or less to form a first glass layer adhered by a sol-gel process to the steel substrate of the equipment,
(b) applying onto the said first glass layer a second repair agent containing a metal alkoxide and an inorganic filler, and heating the second repair agent to form a second glass layer, and
(c) applying onto the second glass layer a liquid impregnating agent containing a metal alkoxide to penetrate into and fill voids formed in the second glass layer, and heating the liquid impregnating agent.

2. A method as claimed in Claim 1 further comprising
(d) applying a third repair agent containing a metal alkoxide and an inorganic filler on to the second glass layer having the filled voids and heating the repair agent to form and laminate a third glass layer thereon, and
(e) applying a further liquid impregnating agent containing a metal alkoxide on to the third glass layer to penetrate and fill voids formed in the third glass layer and heating the second impregnating agent.

3. A method as claimed in Claim 2 in which the inorganic filler in the said third repair agent is a powder having a diameter less than 1»m.

4. A method as claimed in Claim 2 or Claim 3 in which the third repair agent is heated to a temperature in the range of about 300°C to 350°C.

5. A method as claimed in any preceding claim in which steps (b) and (c) are repeated until the thicknss of the second glass layer having the filled voids is approximately equal to that of a glass layer adjacent to the damaged portion.

6. A method as claimed in any preceding claim in which the first repair agent forms a phosphate glass by the sol-gel process.

7. A method as claimed in any preceding claim in which the second repair agent forms a silicate glass by the sol-gel process.

8. A method as claimed in any of claims 1 to 6 in which the second repair agent forms a phosphate glass by the sol-gel process.

9. A method as claimed in any of claims 1 to 6 in which the second repair agent forms a multi-component Na₂O-ZrO₂-SiO₂ glass by the sol-gel process.

10. A method as claimed in any preceding claim in which the inorganic filler included in the second repair agent is a powder having an approximately equal coefficient of thermal expansion to that of the glass layer adjacent to the damaged portion.

11. A method as claimed in Claim 10 in which the powder comprises glass powder of glass of the same type as the glass of the glass layer adjacent to the damaged portion.

12. A method as claimed in any preceding claim further comprising disposing an inorganic sheet on to the damaged portion of the glass layer prior to step (b).

13. A method as claimed in any preceding claim in which the temperature for heating the first repair agent is in the range of about 300°C to 350°C.

14. A method as claimed in any preceding claim in which the second repair agent is heated to a temperature in the range of about 300°C to 350°C.

## Patentansprüche

1. Verfahren zum Reparieren eines beschädigten Bereichs einer Glasschicht einer Einrichtung aus emailliertem Stahl, umfassend
(a) das Auftragen eines ersten Reparaturmittels, das Metallalkoxid enthält, auf den beschädigten Bereich, und das Erhitzen des ersten Reparaturmittels auf eine Temperatur von ungefähr 350° C oder weniger, um eine erste Glasschicht zu bilden, die durch ein Sol-Gel-Verfahren am Metallsubstrat der Einrichtung haftet,
(b) das Auftragen eines zweiten Reparaturmittels, das ein Metallalkoxid und einen anorganisches Füllmaterial enthält, auf die erste Glasschicht, und das Erhitzen des zweiten Reparaturmittels, um eine zweite Glasschicht zu bilden, und
(c) das Auftragen eines flüssigen Imprägniermittels, das ein Metallalkoxid enthält, zum Eindringen in und zum Füllen von Hohlräumen, die sich in der zweiten Glasschicht gebildet haben, und das Erhitzen des flüssigen Imprägniermittels.

2. Verfahren nach Anspruch 1, ferner umfassend
(d) das Auftragen eines dritten Reparaturmittels, das ein Metallalkoxid und ein anorganisches Füllmaterial enthält, auf die zweite Glasschicht mit den gefüllten Hohlräumen, und Erhitzen des Reparaturmittels, um auf ihr eine dritte Glasschicht zu bilden und zu laminieren, und
(e) das Auftragen eines Weiteren flüssigen Imprägniermittels, das ein Metallalkoxid enthält, auf die dritte Glasschicht zum Eindringen in und zum Füllen von Hohlräumen, die sich in der dritten Glasschicht gebildet haben, und das Erhitzen des zweiten flüssigen Imprägniermittels.

3. Verfahren nach Anspruch 2, bei dem das anorganische Füllmaterial im dritten Reparaturmittel ein Pulver mit einem Durchmesser von weniger als 1»m ist.

4. Verfahren nach Anspruch 2 oder Anspruch 3, bei dem das dritte Reparaturmittel auf eine Temperatur erhitzt wird, die ungefähr im Bereich zwischen 300° C und 350° C liegt.

5. Verfahren nach jedem vorhergehenden Anspruch, bei dem Schritte (b) und (c) wiederholt werden, bis die Dicke der zweiten Glasschicht mit den gefüllten Hohlräumen ungefähr der Dicke einer Glasschicht gleicht, die an den beschädigten Bereich angrenzt.

6. Verfahren nach jedem vorhergehenden Anspruch, bei dem das erste Reparaturmittel durch das Sol-Gel-Verfahren ein Phosphatglas bildet.

7. Verfahren nach jedem vorhergehenden Anspruch, bei dem das zweite Reparaturmittel durch das Sol-Gel-Verfahren ein Silikatglas bildet.

8. Verfahren nach jedem der Ansprüche 1 bis 6, bei dem das zweite Reparaturmittel durch das Sol-Gel-Verfahren ein Phosphatglas bildet.

9. Verfahren nach jedem der Ansprüche 1 bis 6, bei dem das zweite Reparaturmittel durch das Sol-Gel-Verfahren ein zusammengesetztes Na₂O-ZrO₂-SiO₂-Glas bildet.

10. Verfahren nach jedem vorhergehenden Anspruch, bei dem das im zweiten Reparaturmittel enthaltene anorganische Füllmaterial ein Pulver ist, das ungefähr den gleichen thermischen Volumenausdehnungskoeffizienten besitzt, wie die Glasschicht, die an den beschädigten Bereich angrenzt.

11. Verfahren nach Anspruch 10, bei dem das Pulver ein Glaspulver enthält, das demselben Glastyp entspricht, wie das Glas der Glasschicht, die an den beschädigten Bereich angrenzt.

12. Verfahren nach jedem vorhergehenden Anspruch, das ferner vor Durchführung von Schritt (b) die Anordnung einer anorganischen Lage auf den beschädigten Bereich der Glasschicht umfaßt.

13. Verfahren nach jedem vorhergehenden Anspruch, bei dem die Temperatur zum Erhitzen des ersten Reparaturmittels ungefähr im Bereich zwischen 300° C und 350° C liegt.

14. Verfahren nach jedem vorhergehenden Anspruch, bei dem das zweite Reparaturmittel auf eine Temperatur erhitzt wird, die ungefähr im Bereich zwischen 300° C und 350° C liegt.

## Revendications

1. Procédé de réparation d'une partie endommagée d'une couche de verre d'un équipement en acier revêtu de verre, comprenant
(a) l'application sur la partie endommagée d'un premier agent de réparation contenant un alkoxyde de métal et le chauffage du premier agent de réparation à une température allant jusqu'à à peu près 350°C ou moins, pour former une première couche de verre mise en adhérence par un traitement sol-gel, sur le substrat en acier de l'équipement,
(b) l'application sur ladite première couche de verre d'un deuxième agent de réparation contenant un alkoxyde de métal et un élément de remplissage non organique, et le chauffage du deuxième agent de réparation pour former une deuxième couche de verre, et
(c) l'application sur la deuxième couche de verre d'un agent d'imprégnation liquide contenant un alkoxyde de métal, pour pénétrer dans et remplir des vides formés dans la deuxième couche de verre, et le chauffage de l'agent d'imprégnation liquide.

2. Procédé selon la revendication 1, comprenant en outre
(d) l'application d'un troisième agent de réparation contenant un alkoxyde de métal et un élément de remplissage non organique sur la deuxième couche de verre ayant les vides remplis et le chauffage de l'agent de réparation pour former et laminer sur ce dernier une troisième couche de verre, et
(e) l'application d'un autre agent d'imprégnation liquide contenant un alkoxyde de métal sur la troisième couche de verre pour pénétrer dans et remplir des vides formés dans la troisième couche de verre et le chauffage du deuxième agent d'imprégnation.

3. Procédé selon la revendication 2, dans lequel l'élément de remplissage non organique contenu dans ledit troisième agent de réparation est une poudre ayant un diamètre inférieur à 1 »m.

4. Procédé selon la revendication 2 ou la revendication 3, dans lequel le troisième agent de réparation est chauffé à une température comprise dans la plage allant d'à peu près 300°C à 350°C.

5. Procédé selon l'une quelconque des revendications précédentes, dans lequel les étapes (b) et (c) sont répétées jusqu'à ce que l'épaisseur de la deuxième couche de verre ayant les vides remplis soit à peu près égale à celle d'une couche de verre adjacente à la partie endommagée.

6. Procédé selon l'une quelconque des revendications précédentes, dans lequel le premier agent de réparation former un verre au phosphate par le traitement sol-gel.

7. Procédé selon l'une quelconque des revendications précédentes, dans lequel le deuxième agent de réparation d'un verre au silicate par le traitement sol-gel.

8. Procédé selon l'une quelconque des revendications 1 à 6, dans lequel le deuxième agent de réparation former un verre au phosphate par le traitement sol-gel.

9. Procédé selon l'une quelconque des revendications 1 à 6, dans lequel le deuxième agent de réparation forme un verre Na₂O-ZrO₂-SiO₂ multicomposants.

10. Procédé selon l'une quelconque des revendications précédentes, dans lequel l'élément de remplissage non organique inclus dans le deuxième agent de réparation est une poudre ayant un coefficient d'expansion thermique à peu près égal à celui de la couche de verre adjacente à la partie endommagée.

11. Procédé selon la revendication 10, dans lequel la poudre comprend de la poudre de verre d'un verre du même type que le verre de la couche de verre adjacente à la partie endommagée.

12. Procédé selon l'une quelconque des revendications précédentes, comprenant en outre la disposition d'une feuille non organique sur la partie endommagée de la couche de verre, avant l'étape (b).

13. Procédé selon l'une quelconque des revendications précédentes, dans lequel la température de chauffage du premier agent de réparation est comprise dans la plage allant d'à peu près 300°C à 350°C.

14. Procédé selon l'une quelconque des revendications précédentes, dans lequel le deuxième agent de réparation est chauffé à une température comprise dans la plage allant d'à peu près 300°C à 350°C.
